# EUROPEAN PATENT SPECIFICATION

(11) **EP 4 492 728 B1**
(45) Date of publication and mention of the grant of the patent: **13.05.2026**
(21) Application number: 24195368.6
(22) Date of filing: 10.01.2022
(51) Int. Cl.: H04L 9/40, G06F 21/45, H04L 9/32, G06F 21/33, H04W 12/02, G06F 21/60, H04L 9/08

(54) **METHOD AND APPARATUS FOR GENERATING CERTIFIED USER DATA**
VERFAHREN UND VORRICHTUNG ZUR ERZEUGUNG ZERTIFIZIERTER BENUTZERDATEN
PROCÉDÉ ET APPAREIL DE GÉNÉRATION DE DONNÉES D'UTILISATEUR CERTIFIÉES

(43) Date of publication of application: 15.01.2025
(62) Divisional of application: 22150766.8
(73) Proprietor: SW7 Ventures (H.K.) Limited, Causeway Bay (HK)
(72) Inventor: WILLIAMSON, Christopher Aaron Stanley, London W8 6BH (GB); RYAN, Mark, London W8 6BH (GB)
(74) Representative: Carpmaels & Ransford LLP

(56) References cited:
- US-A1- 2008 141 330
- PETIT JONATHAN ET AL: "Pseudonym Schemes in Vehicular Networks: A Survey", IEEE COMMUNICATIONS SURVEYS & TUTORIALS, vol. 17, no. 1, 16 March 2015 (2015-03-16), pages 228 - 255, XP011576292, DOI: 10.1109/COMST.2014.2345420
- PARK H PARK Y WON J LEE KISA S KENT BBN TECHNOLOGIES S: "Traceable Anonymous Certificate; rfc5636.txt", TRACEABLE ANONYMOUS CERTIFICATE; RFC5636.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 August 2009 (2009-08-01), XP015065657

## Description

### Technical Field

The present invention lies generally in the technical field of information security. In particular, the present invention concerns a method of generating certified user data that cannot be associated with a specific user without the cooperation of a trustee system.

### Background

Many people have one or more digital identities in addition to their official/legal identity, and many digital platforms require only a digital identity, which may be unique to the platform, for a person to operate on that platform. In many contexts, the digital identity is a customer account or 'log-in' that enables interaction with a digital platform.

In some scenarios, for example obtaining a licence to drive a motor vehicle or to interact with a tax authority, there exists a need to ensure that a person's official identity, or at least a person's personal information, is verified prior to allocating a digital identity. For example, a digital ID to access a government platform is only provided after proof of ID. In some other scenarios, interacting with a second entity may rely on a previous verification that has been undertaken by a first entity, for example, a bank implicitly relies on the previous verification of a person's official identity when that person produces a passport to prove their ID when opening an account. In these scenarios, the first entity (e.g. a government authority) might collude with the second entity (e.g. a bank) to track a user's actions on the digital platform of the second entity.

The use of digital identities without verification of the underlying official identities and personal information can give rise to socially or legally unacceptable pseudonymity. For example, trolling, deliberate misinformation, and abusive commentary in online media may be exercised without ultimate accountability because the responsible individual cannot be identified. Alternatively, without verification, an identity may be 'spoofed', leading to potentially fraudulent activity.

In many scenarios, for example obtaining a licence to drive a motor vehicle or to interact with a tax authority, it has long been agreed that there exists a need to ensure that a person's official identity is verified prior to allocating a digital identity. Increasingly many digital platforms are realising that the need for a verified identity, or at least some verified personal information, applies to their services as well, either to remain in compliance with regulations or to improve user experiences.

However, there is an important privacy consequence of verifying an individual's official identity and/or personal information. If the process of verifying, certifying, and storing official identities or personal information exposes or stores the link between a pseudonym and that official identity or personal information, then the privacy veil of such pseudonymisation is compromised or is susceptible to misuse because the verifying/certifying entity has knowledge of the link between the digital and official identities/personal information. Moreover, such a repository of links is a natural target to attack by a malicious entity such as a hacker, and if compromised, the links between pseudonyms and corresponding official identities/personal information may be obtained.

In view of this, there exists a need for a secure method of providing the benefits of identity verification while preserving the privacy properties of pseudonyms in a manner that avoids increased risk of underlying leakage of personal and identifying information into the digital domain. PETIT JONATHAN ET AL: "Pseudonym Schemes in Vehicular Networks: A Survey", IEEE COMMUNICATIONS SURVEYS & TUTORIALS, vol. 17, no. 1 , pages 228-255, XP011576292 discloses a pseudonym certificate scheme for vehicular systems. PARK H PARK Y WON J LEE KISA S KENT BBN TECHNOLOGIES S: "Traceable Anonymous Certificate; rfc5636.txt", August 2009, XP015065657 discloses a mechanism to generate traceable certificates.

### Summary of the invention

The present invention is directed to subject-matter as disclosed by the appended claims.

### Brief description of the figures

Figure 1 is a block diagram of the architecture of a system capable of executing a method of providing an authenticated certificate to be modified in the generation of certified user data.
Figure 2 is a block diagram of the certified user data that may be produced by the system of Figure 1.
Figure 3 is a flow diagram of a method of providing an authenticated certificate to be modified in the generation of certified user data, and of the modification of that authenticated certificate.
Figure 4 is a block diagram of the architecture of a system of characterizing an unknown user from certified user data and of enabling the characterization of that unknown user.

### Detailed description

The following detailed disclosure outlines the features of specific embodiments of the present invention. In addition, some (but by no means all) variants of the specific embodiment that might be implemented whilst still falling under the scope of the present invention are also described. Whilst the following description is subdivided into sections in order to aid the skilled person's comprehension of the subject-matter, the specific substructure of the detailed description should not be seen as delimiting individual embodiments of the invention. On the contrary, features of the various sections may be combined as appropriate.

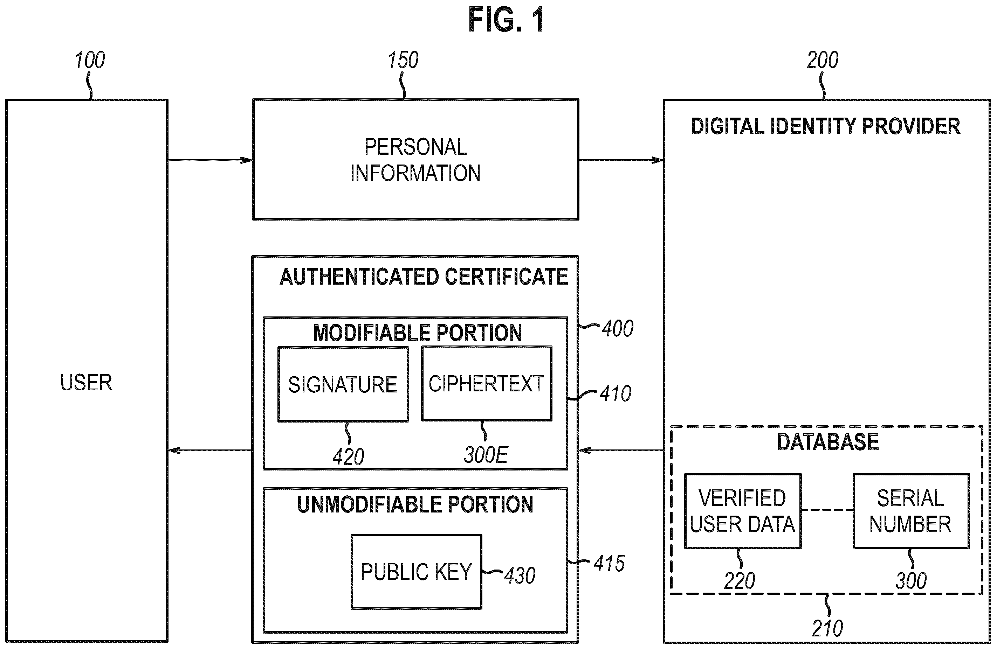

Reference to the features shown in each of Figures 1 to 4 should be made in order to understand the principles of the present invention as outlined below. Nevertheless the present invention is defined only by the appended claims.

As used herein, the term "personal information" refers to information that permits an individual to be characterized. For example, personal information may be an individual's residency or nationality. Alternatively, the personal information may be an account detail, such as a social media account (e.g. on Facebook, or Twitter), or a public identifier, such as a writer's pen name. Alternatively, the personal information may be an IP address associated with an individual's device. In some instances, personal information may be identifying information that that enables the official identity of a natural or legal person to be identified. For a natural person, examples of identifying information include a passport, driving licence or birth certificate. For a legal person such as a company or a trust, identifying information may be original articles of incorporation or an original deed of trust. Identifying information may be in real or digital form (such as a scan or a photo of an original document), but in each case, enables the official identity of a natural/legal person to be identified.

As used herein, the term "characterizing", where a user is being characterized, means the determination of personal information that was previously unknown, but which does not necessarily enable a user's official/legal identity to be revealed. For example, the user's nationality or residency, when such information was previously unknown, is information that characterizes the user. However, knowledge of a user's nationality does not enable a user's official identity to be determined but is nevertheless personal information about the user. Similarly, a user might be characterized by being an employee of a company or organisation, which is personal and potentially private information about the user, but which does not permit the official identity of an individual to be determined.

As used herein, the term "private information" refers to information that is encompassed within the personal information, and maybe within the identifying information. For example, if the personal information comprises identifying information, identifying information includes a photo of a natural person, the private information may be any biometric information extractable from that photo. Alternatively, if the identifying information includes an address, then such an address may also be private information. However, private information may also be captured inside personal information that is not identifying information, such as an individual's residency, or domicile for tax purposes. Such information is private in the sense that it should not be disseminated on more than a need-to-know basis but does not necessarily permit the legal/official identity of an individual to be determined.

As used herein, the term "associating" two or more entities/objects refers to the establishment of a link between two or more previously unrelated entities/objects such that, as a result of the association, a first one of the entities/objects may be recognised to have a connection or relationship to the second one of the entities/objects.

As used herein, an "authenticated certificate" refers to data that is produced by a digital identity provider which indicates that personal information of a user has been successfully verified and that verified user data has been created. The authenticated certificate is data that has been certified by a competent authority and includes a modifiable portion and in some instances, an unmodifiable portion. The authenticated certificate, or part thereof, is linked to a user's personal information via the verified user data and the existence of an authenticated certificate demonstrates successful completion of the verification. The digital identity provider responsible for creating the authenticated certificate is able to associate the certificate, or a portion of it, with the verified user data.

As used herein the term "certified user data" refers to user data that is representative of the successful completion of a verification process by a competent authority, and of the creation of an authenticated certificate. However, certified user data contrasts with the authenticated certificate in that the digital identity provider responsible for creating the authenticated certificate cannot associate the certified user data, nor a portion of it, with the verified user data, without the cooperation of a trustee system.

The methods and system architectures described herein may be executed on any device incorporating a processor, such as a computer, a mobile phone, tablet, PDA, local network, cloud-network or similar. The processor is able to execute instructions that are stored in associated memory, in order to carry out the described steps. The processor may comprise more than one core, and/or may be running on a virtual machine. In some instances, the processor may be a series of processors in a distributed computing system, such as computers on a network. If distributed, part or all of the methods may be executed on different processors, cores or networks.

### Providing a digital identity

Figure 1 shows a high-level block diagram of a system architecture that can execute the computer implemented method according to the present invention. In the first step of the method, user 100 sends personal information 150 to a digital identity provider 200. The personal information may be, for example, the user's driving licence. Since a driving licence comprises personal information that enables a user's residency to be determined from their address, the licence comprises private information that should only be shared on a need-to-know basis. Further, since the licence also enables the user 100 to be identified (i.e. it enables their official identity to be determined) via a user's name, date of birth and address, the driving licence also comprises identifying information that includes private information that should only be shared on a need-to-know basis.

The form of the personal information 150 may be an original copy of the user's driving licence or previously certified copy of the user's driving licence (for example, sent by recorded mail or through the post to the digital identity provider 200). Alternatively, the personal information 150 sent to the digital identity provider 200 may itself be a digital copy of the driving licence, for example, a scan or photo of the original document or other data that includes embedded within it the information present on the driving licence, such as the user's name and address.

As also shown in Figure 1, the digital identity provider 200 is an entity whose function is to verify the authenticity of the personal information 150 provided to it by the user 100, and to issue an authenticated certificate 400 to that user 100 that confirms that the user has undergone the verification process. The issuance of the certificate to the user (although not necessarily the content of that authenticated certificate 400) is an indicator to a third party that the personal information of the user 100 has been verified by the digital identity provider 200. One example of such a process would be when a user proves his/her identity to a tax office, or where a customer proves his or her identity to a bank and uses his or her driving licence to do so.

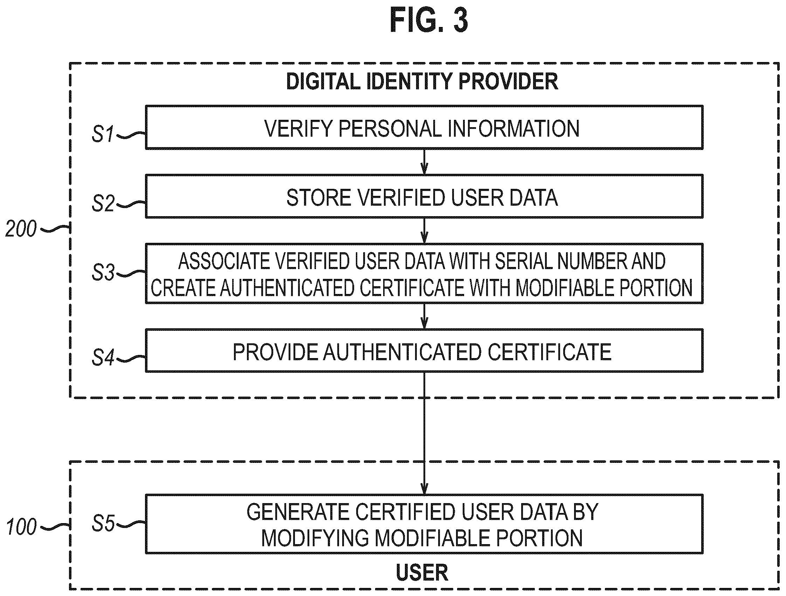

The steps undertaken by the digital identity provider 200 are shown in Figure 3. Upon receipt of personal information 150 from the user 100, the digital identity provider 200 verifies (S1) the authenticity of the personal information 150 and a digital copy of that information is stored (S2) securely in a database 210 accessible by the digital identity provider 200. If the personal information 150 is non-digital itself (for example, an original driving licence that has been posted by recorded mail), a digital copy of the personal information 150 may be created and stored in database 210. The verification of the personal information 150 may be, for example, an inspection of the driving licence for a holographic mark, official seal, or other authenticating feature to verify the authenticity of the licence. In a digital context, the verification of the digital copy of the personal information 150 may be the inspection of the digital copy for a digital signature, such as a signature signed by a private key of the user 100 or by another entity, such as an official authority. Alternative means of verifying the personal information 150 may also be implemented, as will be apparent to those skilled in the art. In each case, the digital identity provider verifies the personal information 150 of the user 100. If the personal information 150 includes identifying information, then the digital identity provider 200 verifies the identity of the user 100.

Once the personal information 150 of the user has been verified, the data containing the personal information forms verified user data 220 that may be stored. The verified user data 220 has the quality that it is based upon personal information 150 that has originated from the user 100, and thus provides a link back to the user 100 who provided it, from which the personal information 150 of the user 100 may be derived. Further, any private information captured within the personal information 150 of the user 100 is susceptible to being obtained by any entity reviewing the user's verified data 220. In the example of a driving licence, the user's address is private information contained within personal information 150, and correspondingly, is contained within verified user data 220.

As further shown in Figure 3, once verified user data 220 is stored, the digital identity provider 200 associates (S3) a first set of data with the verified user data 220. The first set of data may be a database reference to enable a specific entry within database 210 to be retrieved The first set of data may be an arbitrary token that has been created to act as a database reference, (either at the time or previously). Alternatively, the first set of data may be a modified form of the verified user data 220, for example, a cryptographic function or a hash of the verified user data 220 itself, and that hash or cryptographic function may itself act as a database reference. In the present example, verified user data 220 is associated with a serial number 300. The association of the verified user data 220 with the serial number 300 may be stored in the database 210, as also shown in Figure 1. If the digital identity provider 200 is responsible for verifying the identity of multiple users, each user's verified user data 220A, 220B, 220C may be stored with a corresponding association to a serial number 300A, 300B, 300C respectively (not shown). The storage of the association permits the digital identity provider 200 in possession of the serial number 300 or the verified user data 220 to retrieve the other of the serial number 300 or the verified user data 220, using the association. In the present example, knowledge of serial number 300 enables the retrieval of the personal information 150 contained within the user's driving licence, via the verified user data 220. More generally, knowledge of the first set of data enables retrieval of the personal information.

Although in the illustrated example, the digital identity provider 200 establishes an association between the first set of data (the serial number 300) and the verified user data 220, it is emphasised that the use of such a serial number is exemplary, and an alternative database reference or token may be used instead.

In the illustrated example, the digital identity provider 200 has knowledge of the association between the serial number 300 and the verified user data 220. As a result, the digital identity provider 200 also, in principle, has knowledge of the personal information 150, on the basis that the digital identity provider 200 was the entity responsible for establishing the association. However, the digital identity provider 200 should be provided with only enough information to verify the personal information of the user 100 and indicate to any interested party that it has done so via the production of an authenticated certificate 400. It is consequently desirable to remove the requirement for the user 100 to 'trust' the digital identity provider 200 not to reveal the association between verified user data 220 and the serial number 300 . This is achieved via a modification of at least a portion of the authenticated certificate 400 in a fashion detailed further below, such that when modified, the authenticated certificate 400 can no longer be associated with the verified user data 220 via the serial number 300.

If the first set of data (serial number 300) was included directly in authenticated certificate 400, an entity reviewing the authenticated certificate 400 would clearly be able to retrieve the associated verified user data 220 with the assistance of digital identity provider 200. To prevent such an insecurity, authenticated certificate 400 includes an indication of the first set of data. The indication may be, for example, an address where the first set of data may be retrieved/reviewed by an entity who authority to retrieve/review the first set of data is checked, or security may be achieved by, for example, using a cryptographic or hashed form of the first set of data. In the present example, the first set of data (serial number 300 in Figure 1) is straightforwardly encryptable, for example with an asymmetric scheme such as ElGamal. The serial number 300 is encrypted to provide an encrypted serial number 300E as a ciphertext. The encryption may be using the public key of a trustee system 600. The public key of the trustee system is used in order that the trustee system 600 may, in certain circumstances to be described later, decrypt the encrypted serial number 300E to reveal the original serial number 300.

To provide evidence to the user 100 or a third party that the user 100 has successfully completed the verification process, upon successful completion, the digital identity provider 200 provides (S4) the user 100 with an authenticated certificate 400. The creation and provision of the authenticated certificate 400 confirms that a user 100 has successfully undergone the verification process.

It should be noted that whilst the storing of the verified user data 220, the associating of the verified user data 220 with either a first set of data (such as a serial number), the creation of the certificate and the encryption of the first set of data has been described as being undertaken in a particular sequence, the order of these steps is merely exemplary. As the skilled person would recognise, other orders of steps are possible.

As shown in figure 1, the authenticated certificate 400 to be issued for the user 100 comprises a modifiable portion 410 that will be modified by the user 100 as explained below. The modifiable portion 410 includes an indication of the first set of data, and in the illustrated example, the indication is the encrypted first set of data. The encrypted first set of data is a decryptable portion of the modifiable portion 410 of the authenticated certificate 400, and in the exemplary embodiment, comprises the ciphertext that represents the encrypted serial number 300E, encrypted with the public key of the trustee system 600. In the present example, the modifiable portion 410 also includes the digital signature 420 of the digital identity provider 200, signed using the digital identity provider's private key.

In some instances, the authenticated certificate 400 may comprise multiple modifiable portions, each of which may comprise one or more decryptable portions (e.g. multiple encrypted tokens/database references), or a single modifiable portion may comprise multiple decryptable portions. Whilst in the present instance, the token/database reference (serial number 300) is encrypted with a public key of the trustee system 600, in general, where there are multiple decryptable portions, the decryptable portions may be decryptable by different entities, such as different trustee systems. For example, one trustee system may be able to decrypt only a subset of the decryptable portions in authenticated certificate 400, whilst another trustee system is needed to decrypt other portions. In some instances, each decryptable portion requires a different trustee system.

In some instances, the authenticated certificate 400 includes an unmodifiable portion 415 too. This portion may comprise metadata, public information, or other data unrelated to the serial number 300 and which does not permit association of the authenticated certificate 400 (or a portion thereof) with verified user data 220. In some instances, a copy of the digital identity provider's public key 430 is also provided within the unmodifiable portion 415. The public key 430 enables a third party to verify the signature of the digital identity provider 200 responsible for creating the authenticated certificate 400.

Whilst some or all of the content of the modifiable portion 410 may not be accessed by a third party observer due to its encryption, hashing or otherwise, one or both of the (i) provision of the digital identity provider's public key 430 in an unmodifiable portion 415, and/or (ii) the form of the digital signature 420 as being a modifiable digital signature in the modifiable portion 410, provides a third party observer with an indication that the user 100 has undergone a verification process and correspondingly, that the user's personal information has been verified. Either (i) or (ii) may also provide an indication that the user's personal information (which may include identifying information), may be revealed in certain circumstances and may indicate which digital identity provider 200 was responsible for the verification process.

The authenticated certificate 400 is provided to the user (S4). Although the authenticated certificate 400 may be provided by sending it to the user by email, text message or similar, such a process presents its own security risks since the transmission might be intercepted. As a more secure alternative that avoids such a risk, the digital identity provider 200 may provide the authenticated certificate 400 to the user 100 by providing a notification to the user 100 of where to look for the authenticated certificate 400. For example, the authenticated certificate 400 may be published to a private blockchain, encrypted using a public key of the user 100, and a message may be sent to the user 100 to notify the user 100 that the authenticated certificate 400 is available. Thus, the user 100 may access the authenticated certificate 400 using his or her private key, at will. Other forms of dissemination of the authenticated certificate 400 to the user 100 will be immediately apparent to the skilled person.

With continuing reference to Figures 1, 2 and 3, at the point at which the authenticated certificate 400 has been created, the ciphertext of the serial number 300E has been signed by the digital identity provider 200. Hence, a review of the authenticated certificate 400 would reveal the encrypted serial number 300E contained therein and the encryption of the serial number means that generally, the serial number is not accessible by third parties. However, the digital identity provider 200 may retrieve, when provided with the serial number 300, the associated verified user data 220 and correspondingly, may obtain personal information 150 and any private information contained therein. Since the association is stored in database 210, the user 100 is reliant on the honest behaviour of the digital identity provider 200 to prevent the digital identity provider 200 itself revealing the personal information of the user 100. The digital identity provider 200, having encrypted serial number 300 to produce the ciphertext of the encrypted serial number 300E may 'remember' (for example, store in memory or cache) which piece of verified user data 220 is associated with the ciphertext, particularly if the digital identity provider 200 is designed only to be used by a single user 100. If such correspondence between the ciphertext and the verified user data 220 is 'remembered', the digital identity provider 200 may effectively associate the encrypted serial number 300E with the verified user data 220. Both (i) the reliance on the honest behaviour of the digital identity provider 200; and (ii) the ability for the identity provider 200 to associate encrypted serial numbers 300E with verified user data 220 in certain limited scenarios, each represent a privacy risk that is outside the user's control because the user's verified user data 220 and therefore their personal information 150 and any private information therein may be obtained without the user's knowledge through actions of the digital identity provider 200.

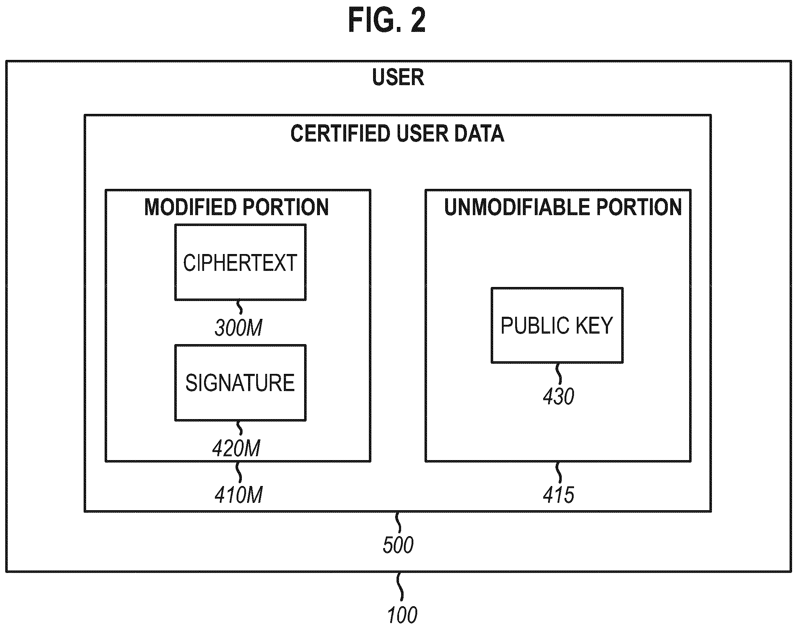

To avoid reliance on the digital identity provider 200, the indication of the first set of data (serial number 300) comprises part of the modifiable portion 410 of the authenticated certificate 400, the authenticated certificate 400 is provided to or received by the user 100, and the modifiable portion 410 of the authenticated certificate 400 is then modified (S5) by the user 100. Once the modifiable portion 410 is modified, the authenticated certificate 400 has generated (i.e. becomes) certified user data 500, as shown in Figure 2. The modification of the authenticated certificate 400 is any modification that renders the authenticated certificate 400, specifically the modifiable portion 410, no longer able to be associated with the verified user data 220 by anyone (including by the digital identity provider 200) without the assistance of trustee system 600. The modification of authenticated certificate 400 thus prevents anyone linking the certified user data 500 back to verified user data 220 via the indication of the first set of data contained therein, or via any other part of the authenticated certificate.

In the present example in which serial number 300 has previously been associated with the verified user data 220 and where the ciphertext that represents the encrypted serial number 300E comprises part of the modifiable portion 410 of authenticated certificate 400, the modification is a re-randomization, and both the digital signature 420 and the encrypted serial number 300E (a ciphertext) are each re-randomized using a re-randomization scheme.

In one particular example, the applied re-randomization scheme is suited for digital signatures on ciphertexts. The scheme re-randomizes the ciphertext, which has the effect of creating a new ciphertext with the same underlying plaintext (in the present example, serial number 300). Then, the scheme allows for adapting the digital signature so that it becomes a valid signature on the new ciphertext. A security property of the scheme is that the signature can only be adapted to another ciphertext that has the same associated plaintext. It is not possible to determine whether two signed ciphertexts are associated with the same plaintext, unless the ciphertexts are decrypted. One exemplary re-randomization scheme for signatures on ciphertexts is that of Bauer and Fuchsbauer (https://eprint.iacr.org/2020/524).

When are-randomization scheme, such as that above, is applied to the authenticated certificate 400, each of ciphertext 300E and signature 420 are modified (more specifically, re-randomized) by the user 100. The public key 430, which denotes the identity of the original signer (possibly the digital identity provider 200), remains unchanged because it is comprised within the unmodifiable portion 415. The modified signature 420M still is a valid signature with respect to the same public key 430.

With continuing reference to Figure 2, the re-randomization by the user 100 of the modifiable portion 410 of the authenticated certificate 400 generates certified user data 500. Certified user data 500 comprises the modified ciphertext of the modifiable portion 410 of the authenticated certificate 400. The modified ciphertext includes a modified encrypted serial number 300M, which represents a re-randomized version of the ciphertext of the encrypted serial number 300E. The modification means that digital identity provider 200, were it to be presented with the modified ciphertext 300M contained within certified user data 500, would be unable to associate the ciphertext 300M with a particular piece of verified user data 220, even if the digital identity provider 200 has stored a record of creating the ciphertext 300E. The modification to generate certified user data 500 that includes ciphertext 300M has the effect that it is no longer necessary for the user 100 to rely on the behaviour of the digital identity provider 200 for the security of the verified user data 220, because the correspondence between ciphertext 300M and the verified user data 220 is not known by the digital identity provider 200.

However, from inspection of the certified user data 500, and specifically the modified portion 410M therein, a third party can see that user 100 has undergone a verification process with digital identity provider 200 because the re-randomization has adapted the digital identity provider's signature 420M so that it is valid for the new ciphertext 300M. The validity may be demonstrated either through inspection of the signature 420M, where the form of the signature is expected, or by using public key 430. In the present instance, the unmodified portion 415 within certified user data 500 (in particular, public key 430) can indicate which digital identity provider 200 was responsible for the verification process, and for the creation an authenticated certificate 400 from which certified user data 500 was produced. Consequently, a third party is able to determine that the user 100 has undergone a verification process, but neither the third party, nor the digital identity provider 200 is able to link the certified user data 500 back to the verified user data 220, and therefore to the personal information 150 of the user 100. In this respect, certified user data 500 (i.e. authenticated certificate 400 once modified) can no longer be associated with the verified user data 220, via any indication of the first set of data contained therein.

Since neither a third party inspecting certified user data 500, nor digital identity provider 200, can associate certified user data 500, nor any portion thereof, back to the user 100, the certified user data 500 provides evidence of verification and the means to determine the user's personal information via the trustee system, but is otherwise fully pseudonymous. A user 100 may then use the certified user data 500, or some function thereof, as a digital identity, safe in the knowledge that his or her personal information 150, or the private information contained therein, cannot be linked to the certified user data 500 and thus there exists, generally, no opportunity for the leakage of the personal information 150, in particular the details of the user's identifying information and private information contained within the user's driving licence, into the digital domain.

Commensurate with the above reduction in risk to the user's personal information, a third party, such as a digital platform host 700, for example the host of a forum or website may permit the forum or website users to use certified user data 500, or some function thereof, as a digital identity for the platform, safe in the knowledge that the user's identity has been verified by a digital identity provider 200, but being unable to use the certified user data 500 to revert to the personal information 150 to determine the personal information of the user 100, or any private information contained therein.

A user 100 may generate more than one set of certified user data 500 from the authenticated certificate 400, by modifying (for example, re-randomizing) the modifiable portion 410 of the authenticated certificate 400 in multiple different ways. Hence, if each set of certified user data 500 corresponds to a different 'log-in' for a different digital platform, the user 100 may generate log-ins for multiple platforms from a single verification process at the digital identity provider 200.

In some examples the certified user data 500 forms the public part of a cryptographic signing key of the user. One advantage arising is that the user can then prove ownership of their certified user data 500 at any time. This capability is useful if the owner wishes to further associate (in a cryptographically binding way) the certified user data 500 to another form of identity, such as an account, a profile or a digital wallet.

In some examples, after the user 100 has created the certified user data 500, he or she may further encrypt the certified user data 500, or a part thereof using a public key, such as the public key of the trustee system 600. In one example, the user 100 further encrypts modified serial number 300M to create a further encrypted modified serial number 300ME (not shown). The user 100 then submits this further encrypted form of the certified user data 500 (of the serial number 300ME in the example) as auxiliary data, back to digital identity provider 200 to be associated with one or more of the serial number 300, authenticated certificate 400, verified user data 220 or otherwise. Hence, digital identity provider 200 accumulates a record of each piece of certified user data 500 that has been created by user 100, but is unable to access that record in the auxiliary data because the certified user data 500 has been further encrypted (without the further encryption of the certified user data 500, the association between the certified user data 500 and the serial number 300 would be accessible to the digital identity provider 200). Once again, although this example refers to further encryption of the modified serial number, in general, the further encryption need not be of a (modified) serial number, and may instead be of a modified database reference or generally, of a modified first set of data.

In such examples, the accumulation of records allows later for a host 700 or a regulatory authority/regulator 800 to request to the trustee system 600 that some (or all) digital identities produced by a given person be revealed, by requesting the further encryption of the certified user data 500 which has been stored by the digital identity provider 200 is decrypted, using the trustee system's private key. This enables a person, rather than just a single one of their digital identities, to be removed from a digital platform, and provides a mechanism by which each piece of certified user data associated with a specific user 100 may be identified. To perform such a decryption, the host or regulator provides an indication of the auxiliary data to the trustee system 600 for the trustee system 600 to decrypt.

### Characterizing an unknown user

The generation of certified user data 500 provides user 100 with a mechanism of demonstrating that his or her personal information 150 has been verified and provides a digital identity for use on a digital platform 1000, but without enabling the digital identity provider 200 to reveal the personal information of the user 100 from that certified user data 500. In addition, the host 700 of the digital platform is unable to discern the personal information of the user 100 from certified user data 500 either.

The certified user data 500, or some function thereof, may be used as the user's log-in to the digital platform, which may be called a 'certonym' (meaning a certified pseudonym). For example, if the digital platform is a website, the user's browsing, posting of messages or commenting may be logged, either directly or indirectly, with an indication of the certified user data 500. If the platform is a digital wallet, the user's transactions may be logged, either directly or indirectly, with an indication of the certified user data 500. In either case, and in other examples, the logging is for the purpose of tracing actions back to the certified user data 500 responsible for each action. In some circumstances, a user 100 may also prove his or her ownership of certified user data 500 in a cryptographic manner, if the certified user data 500 forms a cryptographic key of the user 100.

During most uses, the certified pseudonymity behind such an arrangement is generally acceptable. However, there exist scenarios whereby an otherwise unknown user behind the digital identity using the digital platform 1000 must be characterized from the certified user data 500 and in some instances, identified. One example is during an emergency. Another example is where the behaviour of the unknown user connected with the certified user data 500 is unacceptable. For instance, where the platform 1000 is a website, the certified user data 500 forms a constituent of the (unknown) user 100's log-in and that log-in is found to be 'trolling' comments or content made by other users or the host. Another example of unacceptable use would be where the platform is a digital wallet and the certified user data 500 represents a log-in for the digital wallet, and the unknown user has been found to be making fraudulent or otherwise illicit transactions. In such scenarios, an unknown user behind the digital identity comprising the certified user data 500 may need to be identified. In these scenarios, a mechanism to reverse the process of generating the certified user data 500 is required, else the user 100 would be able to act in an unacceptable fashion with impunity, as can currently be done with state of the art purely pseudonymous systems.

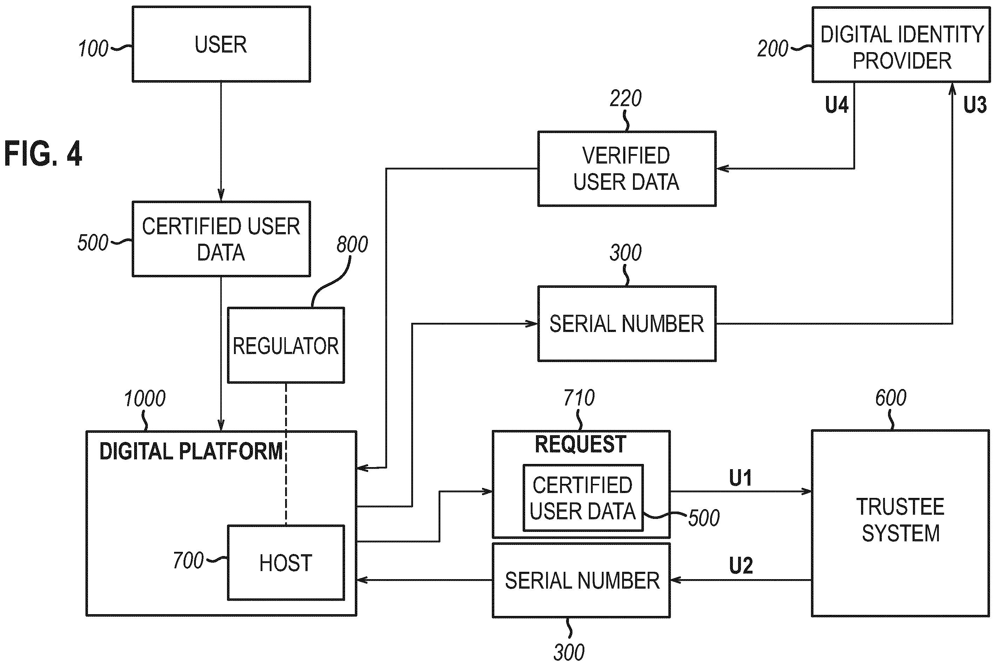

Figure 4 shows the architecture of a system in which a user 100, who has previously generated certified user data 500 according to the invention exemplified in the scheme of Figures 1 to 3, and has used that certified user data 500 to interact with a digital platform, is characterized. Whilst this example refers to a scenario whereby the user 100 behind certified user data 500 has made abusive comments on a website, this example should not be understood to be limiting.

If the user's behaviour is unacceptable, for example, because the user 100 engages in persistent breaking of commenting rules or policy, the initial step is for the host 700 to identify the certified user data 500 responsible for the comment(s). At this point, host 700 is unaware of the official identity or any personal information of the user 100 behind the certified user data 500 and has no access to any personal information 150 nor verified user data 220 regarding the user 100. Thus the user 100 presently remains an unknown user.

Although unable to identify the user 100, the host 700 is able to determine the certified user data 500 that is responsible for the unacceptable behaviour by, for example, interrogating the comment, or the logs of activity at the website, or similar.

Once the relevant certified user data 500 has been identified, the host 700 reviews the certified user data 500. As shown in Figure 2, comprised within the certified user data 500 is both an identifier of digital identity provider 200 (the associating entity), such as one or more of a public key 430 residing in the unmodified portion 415 of the certified user data 500, and/or a modified digital signature 420M, residing in modified portion 410M of the certified user data 500. Accompanying each of these elements is a ciphertext, which in the example is ciphertext 300M, the modified encrypted serial number 300. Whilst host 700 cannot decrypt the ciphertext 300M, the host 700 may recognise the form of one or more of these elements in order to determine that the certified user data 500 the host is examining is certified user data that has previously been generated from an authenticated certificate 400. In this sense, the fact that the certified user data 500 has the correct form is an indicator that the host is interrogating certified user data 500 (as opposed to any other data).

In some instances, the host 700 may check that the modified signature 420M is a valid signature with respect to the public key 430 of the digital identity provider 200.

Further, the presence, although not the content, of the identifier makes the existence of verified user data 220 and the associated serial number 300 apparent, although neither is contained within the certified user data 500. Rather, the certified user data 500 itself provides an indication that a verification process has previously taken place with a digital identity provider 200, and that in principle the digital identity provider 200 either knows or has stored the correspondence between verified user data 220 and another piece of data, for example the (decrypted) ciphertext of the first set of data (the serial number 300 in the illustrated example).

In some examples, rather than the host 700 verifying whether the certified user data 500 has the correct form and/or verifying the identity of the digital identity provider 200, the host 700 instead enables the certified user data 500 to be verified by a third party. The third party may be a regulatory authority 800, the trustee system 600 or another entity. To check the form of the certified user data 500, the certified user data 500 may be sent to that third party, or the third party may be provided the certified user data 500, for example via publication. The third party may then interrogate the certified user data 500 and confirm that the certified user data 500 is of the correct form in a similar fashion to that outlined above in respect of the host 700. The third party, such as regulator 800 then provides the confirmation to the host 700. In this alternative, upon receipt of the confirmation, the host 700 is provided with an indication that a verification process has previously taken place by a digital identity provider 200.

Subsequently and as shown in Figure 4, host 700 sends (U1) a request 710 to the trustee system 600. The request may comprise a copy of the certified user data 500 itself, or may comprise an indication of the certified user data 500's location (such as the certified user data 500's server address) and means to permit trustee system 600 to retrieve or interrogate that certified user data 500. Host 700 may send the request 710 themselves, or may ask a third party, such as the regulatory authority 800 to send the request 710 to trustee system 600 on the host 700's behalf. As a further alternative, the host 700 may report the unacceptable behaviour and the certified user data 500 to the third party or the regulatory authority 800 and the third party or regulatory authority 800 may initiate the sending of a request 710 to the trustee system 600.

Upon receipt of a request 710, the trustee system 600 reviews the indication of the certified user data 500 for the ciphertext 300M. Since the ciphertext 300M was originally encrypted, before modification, with the public key of the trustee system, the trustee system 600 may use its private key to decrypt the ciphertext 300M and reveal the serial number 300. In this example, the ciphertext which is the modified encrypted serial number 300M was formed as a re-randomization of encrypted serial number 300E, and as such both are valid ciphertexts that encrypt the same plaintext (serial number 300) with respect to the trustee system 600's private key. Since re-randomization preserves the underlying plaintext of a ciphertext, the trustee system's private key can be directly used to decrypt modified encrypted serial number 300M to obtain the serial number 300.

If multiple decryptable portions/encrypted tokens/database references/serial numbers are present in the certified user data 500 (because the original authenticated certificate 400 included a modifiable portion 410 with multiple decryptable portions, or included multiple modifiable portions each with their own decryptable portion, as previously described), the trustee system 600 may choose which of the decryptable portions to decrypt, whilst leaving the remaining portions encrypted. The choice may be at the discretion of the trustee system 600, or may be indicated to the trustee system 600 by the requestor. Further, in some circumstances, trustee system 600 will only be able to decrypt a subset of the decryptable portions, and one or more other trustee systems are required to decrypt the remainder.

Whilst in principle only a single trustee system 600 in possession of the correct private key is required, in some embodiments of the invention a plurality of trustee systems 600 may decrypt the ciphertext (the modified encrypted serial number 300M) contained within the certified user data 500. For example, trustee system 600 may be a distributed trustee system 600, with multiple nodes responsible for the decryption of the ciphertext 300M, for example with each node decrypting a portion of the ciphertext with a threshold encryption/decryption scheme, or with multiple nodes decrypting the text with some nodes providing either redundancy or checking functions.

Further, the trustee system 600 (whether distributed or not) may authenticate the request 710 to decrypt the certified user data 500, for example, by verifying the authority of the host 700 or regulator 800 to request the decryption of the ciphertext 300M. For example, request 710 may contain a digital signature of the requestor and the public key of the requestor in order that the authority of the requestor to request decryption is verified. If multiple trustee systems 600 are used, the decryption of ciphertext 300M might occur only if a threshold number of trustee systems agree that authority exists, for example, greater than 50% of the trustee systems 600.

Once trustee system 600 has decrypted the ciphertext of the modified encrypted serial number 300M, the trustee system 600 provides (U2) the unencrypted serial number 300 to the requestor. In some instances, the serial number 300 may be transmitted to the requestor, but similar to the other instances previously outlined, transmission may be susceptible to interception. Hence, in some examples, the serial number 300 is stored in a location that the requestor may access. For example, the trustee system 600 may re-encrypt the serial number 300 with the public key of the requestor and notify the requestor of the location (e.g. a private blockchain), such that the requestor may access the serial number 300 using his or her private key. Whilst in the present example, the serial number 300 is used as the first set of data, an alternative token, or an alternative database reference or other form of first set of data may be provided to the requestor, consistent with the piece of data that has previously been associated with the verified user data 220 by the digital identity provider 200.

Although not shown, the request 710 may be publicly logged, such that abuse of the ability to make the request 710 by the host 700 or the regulator 800 is disincentivised, because any such request 710 is able to be seen by a third party, and possibly by user 100. The publication of such logs prevents host 700 or regulator 800 seeking to reveal the personal information of the user 100 behind certified user data 500 without knowledge of user 100 or another third party. In some cases, the log may be an inevitable, overt and persistent record of the request 710, for example, publication to a public blockchain.

Once the unencrypted serial number 300 has been provided to the host 700 (or to the regulator 800, as appropriate), the host provides (U3) the serial number 300 to digital identity provider 200. The indication of which digital identity provider 200 that the host 700 should approach is determined by the certified user data 500, which includes one or both of digital signature 420M and public key 430, each of which is an indicator of digital identity provider 200. In similar fashion to the provision of the certified user data 500 to the trustee system 600, the host 700 may transmit the serial number 300 (the first set of data) to the digital identity provider 200, or may instead transmit a message to the digital identity provider 200 indicating where the serial number 300 may be found.

Upon receiving the indication of the serial number 300, digital identity provider 200 may respond by providing an indication of the verified user data 220 that contains the personal information 150 associated with the user 100. To do so, the digital identity provider 200 interrogates the database 210 to find the verified user data 220 associated with the serial number 300. In some examples, the digital identity provider 200 may verify the authority of the host 700 or regulator 800 or other entity providing the serial number 300. For example, the serial number 300 may be accompanied by a digital signature of the requestor (i.e. the host 700 or regulator 800) and the public key of the requestor in order that the authority of the requestor to request that the digital identity provider 200 reveal the association is authorised.

Once host 700 or regulator 800 has been provided with the verified user data 220 comprising the personal information 150, the host 700 or regulator 800 may act in respect of that information. For example and depending on the personal information, the host 700 may publish the information related to the now known user 100, thereby revealing the personal information of the user responsible for unacceptable behaviour; if the information is identifying information, the publication will reveal the identity of the user 100 to others in a 'naming and shaming fashion'. Alternatively, the host 700 may store the personal information of the now known user 100 for future reference, or if the information comprises identifying information, store the identifying information of the now known user 100 for future reference. The host 700 may sanction the user 100, for example banning access to the website or to any digital platform the host 700 is responsible for or restricting the user's ability to comment. The user's personal information may be added to a blacklist and/or reported to the legal authorities for prosecution. In another example, the host 700 may select a second piece of certified user data and issue a request to the trustee system 600 to decrypt the modified encrypted first set of data (the modified encrypted serial number in some examples) contained within that second piece of certified data. In one scenario, the host may wish to see whether two pieces of certified user data (certified user data 500 and the second piece of certified user data) have the same underlying user 100. In each case, as a result of the actions that are undertaken with certified user data 500, the host 700 (or the regulator 800, who may instead perform any of the above actions) may revoke the certified pseudonymity previously enjoyed by user 100 so that the user in question's personal information is revealed. In examples where the user has stored auxiliary data with the digital identity provider 200, the accumulation of records at the digital identity provider 200 may be provided to the host 700 or regulator 800. If those records have been encrypted with the public key of the trustee system 600, the host or regulator may request decryption of these records by the trustee system 600. The request for decryption proceeds analogously to the original request in Figure 4 and may be logged and authorised in similar fashion as described above. Once decryption by the trustee system 600 is complete, each of the pieces of certified user data associated with the user 100 will be revealed and action may be taken with respect to each of these digital identities, such as removing them from their associated digital platforms.

Given the above, the system with the architecture shown in Figure 4 indicates how the certified user data 500 may be reconnected with the verified user data 220, and ultimately with personal information 150 of user 100, in order that the user may not act with impunity on a digital platform. Thus, in this sense, the breaking of the link between the first set of data contained within authenticated certificate 400 and the verified user data 220 when the modifiable portion 410 of the certificate 400 is modified to generate certified user data 500 is reversible and the link may be re-established.

The present invention provides a system for a user to generate certified user data that may act as a digital identity, providing the benefits of pseudonymity to the user, privacy of the user's data and minimising the risk of information leakage, whilst providing the host or a regulator with an indication that the user's personal information has been verified in the past by a digital identity provider. Further, if a user misbehaves or the situation otherwise warrants, then the pseudonymity of the user's certified data may be removed.

Whilst the actions of the individual entities in the system have been described in the examples explained above, as the skilled person would realise, the combination of the various entities may also collectively provide the benefits of the system. As just a few examples, from the perspective of the digital identity provider 200, the digital identity provider 200 and the user 100 work together to create the authenticated certificate 400 once the user's personal information 150 has been verified, thus verifying the user 100's information. From the user 100's point of view, in exchange for the provision of personal information 150 to the digital identity provider 200, an authenticated certificate 400 that he or she may modify to generate certified user data 500 is received or provided. The host 700 (perhaps under the supervision of regulatory authority 800) may recognise the user 100 has undergone the verification process with digital identity provider 200 and may choose to accept certified user data 500 that has been produced by that digital identity provider 200 as part of a log-in to access the host's digital platform, safe in the knowledge that the user may, if necessary, be characterized, or even identified. Whilst host 700/regulator 800 may work together to request and ultimately reveal the personal information 150 of the user 100, each may only do so if the circumstances are such that the trustee system 600 will assist. When such circumstances are present, the trustee system 600 works with the host 700/regulator 800 to prevent the (unknown) user 100 acting with impunity on the digital platform. All the while however, user 100 may monitor the requests to trustee system 600, thereby disincentivizing the host 700 or regulator 800 abusing their ability to reveal the user behind certified user data 500. Similarly, the trustee system 600 and the host 700/regulator 800 work together to request and ultimately reveal the personal information 150 of the user, in appropriate circumstances, from the certified user data 500 that has been created. Thus each entity within the system is able to cooperate to achieve the advantages arising from the system.

It will be appreciated that the above disclosure provides specific examples of certain implementations of the invention, and that modifications can be made within the scope of the appendant claims. Such modifications will similarly seize upon the advantages of the method and system for outlined here in respect of privacy and data security will also be apparent to those skilled in the art, and the individual scenarios outlined herein should not be considered as being limiting.

## Claims

1. A computer-implemented method of providing an authenticated certificate by using a first set of data that has been associated with verified user data by an associating entity, wherein the verified user data comprises personal information of a user, the method performed by an issuing entity, the method comprising the steps of:
encrypting using a public key of a trustee system the first set of data to form an encrypted first set of data, and wherein the encrypted first set of data forms an indication of the first set of data,
creating the authenticated certificate to be modified in the generation of the certified user data, wherein the authenticated certificate comprises a modifiable portion including the indication of the first set of data; and
providing the authenticated certificate for the generation of the certified user data,
wherein the modifiable portion is modifiable such that, when modified, the authenticated certificate can no longer be associated with the verified user data.

2. The method of claim 1, wherein the first set of data comprises one or more of a token, a database reference, or a serial number.

3. The method of one of claims 1 to 2, wherein the modifiable portion of the created authenticated certificate comprises an identifier of the entity creating the authenticated certificate, and optionally, wherein the identifier comprises a signature signed using the entity's private key.

4. The method of any preceding claim, wherein the modifiable portion comprises a re-randomizable portion.

5. The method of any preceding claim, wherein the association between the first set of data and verified user data has been stored by the association entity, and optionally wherein the computer-implemented method of providing an authenticated certificate also uses an identifier of the association entity.

6. The method of any preceding claim, further comprising the step of modifying the modifiable portion of the authenticated certificate to generate the certified user data.

7. The method of any preceding claim, further comprising the step of storing auxiliary data, wherein the auxiliary data comprises an association between the verified user data and an encrypted version of an indication of the certified user data, and optionally, wherein the encryption to create the encrypted version of an indication of the certified user data occurs using a public key of a trustee system.

8. The method of any preceding claim, wherein the personal information comprises identifying information, and/or
wherein the certified user data comprises a cryptographic key of the user.

9. A computer-implemented method of enabling the characterization of an unknown user from certified user data, wherein the certified user data has been generated through modification of an authenticated certificate, wherein the certified user data comprises a modified portion created through modification of a modifiable portion of the authenticated certificate, the modified portion and modifiable portion both comprising an encrypted first set of data, wherein the encrypted first set of data was created through encryption of a first set of data using at least one public key of a respective at least one trustee system, the first set of data having been associated with verified user data by an associating entity, the verified user data comprising personal information of the unknown user, wherein the modifiable portion is modifiable such that, when modified, the authenticated certificate can no longer be associated with the verified user data, wherein the certified user data comprises an identifier of the associating entity, and wherein the method is executed by the at least one trustee system, the method comprising the steps of:
receiving, from a requestor, a request comprising the certified user data or an indication of the certified user data, wherein the indication of the certified user data allows the certified user data to be retrieved by the at least one trustee system;
if the request comprises the indication of the certified user data, obtaining the certified user data based on the indication of the certified user data,
decrypting the encrypted first set of data of the modified portion comprised in the certified user data, to provide the first set of data; and
providing, to the requestor, the first set of data associated with the verified user data to enable the characterization of the unknown user.

10. A computer-implemented method of characterizing an unknown user from certified user data, wherein the certified user data has been generated through modification of an authenticated certificate, wherein the certified user data comprises a modified portion created through modification of a modifiable portion of the authenticated certificate, the modified portion and modifiable portion both comprising an encrypted first set of data, wherein the encrypted first set of data was created through encryption of a first set of data using at least one public key of a respective at least one trustee system, , the first set of data having been associated with verified user data by an associating entity, the verified user data comprising personal information of the unknown user, wherein the modifiable portion is modifiable such that, when modified, the authenticate certificate can no longer be associated with the verified user data, wherein the certified user data comprises an identifier of the associating entity,
the method performed by an entity desiring to characterize the unknown user, the method comprising the steps of:
providing, to the at least one trustee system, the certified user data or an indication of the certified user data, wherein the indication of the certified user data allows the certified user data to be retrieved by the at least one trustee system;
receiving, from the at least one trustee systems, the first set of data;
providing, to the associating entity, the first set of data; and
receiving, from the associating entity, verified user data comprising personal information of the unknown user.

11. The method of claim 10, wherein the identifier of the associating entity comprises one or more of:
a signature signed using the associating entity's private key, and optionally, wherein the signature is comprised within the modified portion; and
a public key of the associating entity comprised within the authenticated certificate, and optionally, wherein the public key is comprised within an unmodified portion of the authenticated certificate.

12. The method of any one of claims 10 to 11, wherein the modified portion is a re-randomized portion and wherein the modification is a re-randomization.

13. A computer program product comprising instructions that, when executed, cause one or more processor(s) to perform the method of one of claims 1 to 12.

14. A computer-readable medium comprising instructions that, when executed, cause one or more processor(s) to perform the method of one of claims 1 to 12.

15. A processor configured to execute the method of one of claims 1 to 12.

## Patentansprüche

1. Computerimplementiertes Verfahren zum Bereitstellen eines authentifizierten Zertifikats durch Verwenden eines ersten Satzes von Daten, die durch eine Zuordnungsentität verifizierten Benutzerdaten zugeordnet wurden, wobei die verifizierten Benutzerdaten persönliche Informationen eines Benutzers umfassen, wobei das Verfahren durch eine Ausstellungsentität durchgeführt wird, wobei das Verfahren die Schritte umfasst:
Verschlüsseln, unter Verwendung eines öffentlichen Schlüssels eines Trustee-Systems, des ersten Satzes von Daten, um einen verschlüsselten ersten Satz von Daten zu bilden, und wobei der verschlüsselte erste Satz von Daten eine Angabe des ersten Satzes von Daten bildet,
Erstellen des authentifizierten Zertifikats, das bei der Erzeugung der zertifizierten Benutzerdaten modifiziert werden soll, wobei das authentifizierte Zertifikat einen modifizierbaren Abschnitt, einschließlich einer Angabe des ersten Satzes von Daten, umfasst; und
Bereitstellen des authentifizierten Zertifikats für die Erzeugung der zertifizierten Benutzerdaten,
wobei der modifizierbare Abschnitt modifizierbar ist, sodass, wenn er modifiziert ist, das authentifizierte Zertifikat nicht mehr den verifizierten Benutzerdaten zugeordnet werden kann.

2. Verfahren nach Anspruch 1, wobei der erste Satz von Daten eines oder mehrere von einem Token, einer Datenbankreferenz oder einer Seriennummer umfasst.

3. Verfahren nach einem der Ansprüche 1 bis 2, wobei der modifizierbare Abschnitt des erstellten authentifizierten Zertifikats einen Identifikator der Entität, die das authentifizierte Zertifikat erstellt, umfasst und wobei optional der Identifikator eine Signatur, die unter Verwendung des privaten Schlüssels der Entität signiert ist, umfasst.

4. Verfahren nach einem der vorstehenden Ansprüche, wobei der modifizierbare Abschnitt einen rerandomisierbaren Abschnitt umfasst.

5. Verfahren nach einem der vorstehenden Ansprüche, wobei die Zuordnung zwischen dem ersten Satz von Daten und verifizierten Benutzerdaten durch die Zuordnungsentität gespeichert wurde und wobei optional das computerimplementierte Verfahren zum Bereitstellen eines authentifizierten Zertifikats auch einen Identifikator der Zuordnungsentität verwendet.

6. Verfahren nach einem der vorstehenden Ansprüche, ferner umfassend den Schritt des Modifizierens des modifizierbaren Abschnitts des authentifizierten Zertifikats zum Erzeugen der zertifizierten Benutzerdaten.

7. Verfahren nach einem der vorstehenden Ansprüche, ferner umfassend den Schritt des Speicherns von Hilfsdaten, wobei die Hilfsdaten eine Zuordnung zwischen den verifizierten Benutzerdaten und einer verschlüsselten Version einer Angabe der zertifizierten Benutzerdaten umfassen und wobei optional die Verschlüsselung zum Erstellen der verschlüsselten Version einer Angabe der zertifizierten Benutzerdaten unter Verwendung eines öffentlichen Schlüssels eines Trustee-Systems erfolgt.

8. Verfahren nach einem der vorstehenden Ansprüche, wobei die persönlichen Informationen Identifizierungsinformationen umfassen und/oder wobei die zertifizierten Benutzerdaten einen kryptografischen Schlüssel des Benutzers umfassen.

9. Computerimplementiertes Verfahren zum Ermöglichen der Charakterisierung eines unbekannten Benutzers aus zertifizierten Benutzerdaten, wobei die zertifizierten Benutzerdaten durch eine Modifikation eines authentifizierten Zertifikats erzeugt wurden, wobei die zertifizierten Benutzerdaten einen modifizierten Abschnitt umfassen, der durch eine Modifikation eines modifizierbaren Abschnitts des authentifizierten Zertifikats erzeugt wurde, wobei der modifizierte Abschnitt und der modifizierbare Abschnitt beide einen verschlüsselten ersten Satz von Daten umfassen, wobei der verschlüsselte erste Satz von Daten durch eine Verschlüsselung eines ersten Satzes von Daten unter Verwendung mindestens eines öffentlichen Schlüssels eines jeweiligen mindestens einen Trustee-Systems erzeugt wurde, wobei der erste Satz von Daten durch eine Zuordnungsentität verifizierten Benutzerdaten zugeordnet wurde, wobei die verifizierten Benutzerdaten persönliche Informationen des unbekannten Benutzers umfassen, wobei der modifizierbare Abschnitt modifizierbar ist, sodass, wenn er modifiziert ist, das authentifizierte Zertifikat nicht mehr den verifizierten Benutzerdaten zugeordnet werden kann, wobei die zertifizierten Benutzerdaten einen Identifikator der Zuordnungsentität umfassen und wobei das Verfahren durch das mindestens eine Trustee-System ausgeführt wird, wobei das Verfahren die Schritte umfasst:
Empfangen, von einem Anforderer, einer Anforderung, umfassend die zertifizierten Benutzerdaten oder eine Angabe der zertifizierten Benutzerdaten, wobei die Angabe der zertifizierten Benutzerdaten ermöglicht, dass die zertifizierten Benutzerdaten durch das mindestens eine Trustee-System abgerufen werden;
wenn die Anforderung die Angabe der zertifizierten Benutzerdaten umfasst, Erhalten der zertifizierten Benutzerdaten basierend auf der Angabe der zertifizierten Benutzerdaten,
Entschlüsseln des verschlüsselten ersten Satzes von Daten des modifizierten Abschnitts, der in den zertifizierten Benutzerdaten enthalten ist, um den ersten Satz von Daten bereitzustellen; und
Bereitstellen, an den Anforderer, des ersten Satzes von Daten, die den verifizierten Benutzerdaten zugeordnet sind, um die Charakterisierung des unbekannten Benutzers zu ermöglichen.

10. Computerimplementiertes Verfahren zum Charakterisieren eines unbekannten Benutzers aus zertifizierten Benutzerdaten, wobei die zertifizierten Benutzerdaten durch eine Modifikation eines authentifizierten Zertifikats erzeugt wurden, wobei die zertifizierten Benutzerdaten einen modifizierten Abschnitt umfassen, der durch eine Modifikation eines modifizierbaren Abschnitts des authentifizierten Zertifikats erzeugt wurde, wobei der modifizierte Abschnitt und der modifizierbare Abschnitt beide einen verschlüsselten ersten Satz von Daten umfassen, wobei der verschlüsselte erste Satz von Daten durch eine Verschlüsselung eines ersten Satzes von Daten unter Verwendung mindestens eines öffentlichen Schlüssels eines jeweiligen mindestens einen Trustee-Systems erzeugt wurde, wobei der erste Satz von Daten durch eine Zuordnungsentität verifizierten Benutzerdaten zugeordnet wurde, wobei die verifizierten Benutzerdaten persönliche Informationen des unbekannten Benutzers umfassen, wobei der modifizierbare Abschnitt modifizierbar ist, sodass, wenn er modifiziert ist, das Authentifizierungszertifikat nicht mehr den verifizierten Benutzerdaten zugeordnet werden kann, wobei die zertifizierten Benutzerdaten einen Identifikator der Zuordnungsentität umfassen,
wobei das Verfahren durch eine Entität durchgeführt wird, die den unbekannten Benutzer charakterisieren möchte, wobei das Verfahren die Schritte umfasst:
Bereitstellen, an das mindestens eine Trustee-System, der zertifizierten Benutzerdaten oder einer Angabe der zertifizierten Benutzerdaten, wobei die Angabe der zertifizierten Benutzerdaten ermöglicht, dass die zertifizierten Benutzerdaten durch das mindestens eine Trustee-System abgerufen werden;
Empfangen, vom mindestens einen Trustee-System, des ersten Satzes von Daten;
Bereitstellen, an die Zuordnungsentität, des ersten Satzes von Daten und
Empfangen, von der Zuordnungsentität, von verifizierten Benutzerdaten, umfassend persönliche Informationen des unbekannten Benutzers.

11. Verfahren nach Anspruch 10, wobei der Identifikator der Zuordnungsentität eines oder mehrere umfasst von:
einer Signatur, die unter Verwendung des privaten Schlüssels der Zuordnungsentität signiert ist, und wobei optional die Signatur innerhalb des modifizierten Abschnitts enthalten ist; und
einem öffentlichen Schlüssel der Zuordnungsentität, der innerhalb des authentifizierten Zertifikats enthalten ist, und wobei optional der öffentliche Schlüssel innerhalb eines nicht modifizierten Abschnitts des authentifizierten Zertifikats enthalten ist.

12. Verfahren nach einem der Ansprüche 10 bis 11, wobei der modifizierte Abschnitt ein rerandomisierter Abschnitt ist und wobei die Modifikation eine Rerandomisierung ist.

13. Computerprogrammprodukt, umfassend Anweisungen, die, wenn sie ausgeführt werden, einen oder mehrere Prozessor(en) zum Durchführen des Verfahrens nach einem der Ansprüche 1 bis 12 veranlassen.

14. Computerlesbares Medium, umfassend Anweisungen, die, wenn sie ausgeführt werden, einen oder mehrere Prozessor(en) zum Durchführen des Verfahrens nach einem der Ansprüche 1 bis 12 veranlassen.

15. Prozessor, der zum Ausführen des Verfahrens nach einem der Ansprüche 1 bis 12 ausgelegt ist.

## Revendications

1. Procédé mis en œuvre par ordinateur pour fournir un certificat authentifié en utilisant un premier ensemble de données qui a été associé à des données d'utilisateur vérifiées par une entité d'association, les données d'utilisateur vérifiées comprenant des informations personnelles d'un utilisateur, le procédé étant exécuté par une entité émettrice, le procédé comprenant les étapes suivantes :
crypter, à l'aide d'une clé publique d'un système fiduciaire, le premier ensemble de données pour former un premier ensemble de données crypté, et le premier ensemble de données crypté formant une indication du premier ensemble de données,
créer le certificat authentifié à modifier lors de la génération des données d'utilisateur certifiées, le certificat authentifié comprenant une partie modifiable comprenant l'indication du premier ensemble de données ; et
fournir le certificat authentifié pour la génération des données d'utilisateur certifiées,
où la partie modifiable est modifiable de sorte que, lorsqu'elle est modifiée, le certificat authentifié ne peut plus être associé aux données d'utilisateur vérifiées.

2. Procédé selon la revendication 1, dans lequel le premier ensemble de données comprend un ou plusieurs éléments parmi un jeton, une référence de base de données ou un numéro de série.

3. Procédé selon l'une des revendications 1 et 2, dans lequel la partie modifiable du certificat authentifié créé comprend un identifiant de l'entité créant le certificat authentifié, et facultativement, dans lequel l'identifiant comprend une signature signée en utilisant la clé privée de l'entité.

4. Procédé selon l'une quelconque des revendications précédentes, dans lequel la partie modifiable comprend une partie re-randomisable.

5. Procédé selon l'une quelconque des revendications précédentes, dans lequel l'association entre le premier ensemble de données et des données d'utilisateur vérifiées a été stockée par l'entité d'association et, facultativement, dans lequel le procédé mis en œuvre par ordinateur de fourniture d'un certificat authentifié utilise également un identifiant de l'entité d'association.

6. Procédé selon l'une quelconque des revendications précédentes, comprenant en outre l'étape comprenant de modifier la partie modifiable du certificat authentifié pour générer les données d'utilisateur certifiées.

7. Procédé selon l'une quelconque des revendications précédentes, comprenant en outre l'étape comprenant de stocker des données auxiliaires, où les données auxiliaires comprennent une association entre les données d'utilisateur vérifiées et une version cryptée d'une indication des données d'utilisateur certifiées et, facultativement, où le cryptage pour créer la version cryptée d'une indication des données d'utilisateur certifiées se produit en utilisant une clé publique d'un système de fiduciaire.

8. Procédé selon l'une quelconque des revendications précédentes, dans lequel les informations personnelles comprennent des informations d'identification, et/ou dans lequel les données d'utilisateur certifiées comprennent une clé cryptographique de l'utilisateur.

9. Procédé mis en œuvre par ordinateur pour permettre la caractérisation d'un utilisateur inconnu à partir de données d'utilisateur certifiées, où les données d'utilisateur certifiées ont été générées par modification d'un certificat authentifié, où les données d'utilisateur certifiées comprennent une partie modifiée créée par modification d'une partie modifiable du certificat authentifié, la partie modifiée et la partie modifiable comprenant toutes deux un premier ensemble de données cryptées, où le premier ensemble de données cryptées a été créé par cryptage d'un premier ensemble de données à l'aide d'au moins une clé publique d'au moins un système de fiduciaire respectif, le premier ensemble de données ayant été associé à des données d'utilisateur vérifiées par une entité associée, les données d'utilisateur vérifiées comprenant des informations personnelles de l'utilisateur inconnu, la partie modifiable étant modifiable de telle sorte que, lorsqu'elle est modifiée, le certificat authentifié ne peut plus être associé aux données d'utilisateur vérifiées, les données d'utilisateur certifiées comprenant un identifiant de l'entité d'association, et où le procédé est exécuté par l'au moins un système fiduciaire, le procédé comprenant les étapes suivantes :
recevoir, en provenance d'un demandeur, une demande comprenant les données d'utilisateur certifiées ou une indication des données d'utilisateur certifiées, l'indication des données d'utilisateur certifiées permettant aux données d'utilisateur certifiées d'être récupérées par les un ou plusieurs systèmes fiduciaires ; si la requête comprend l'indication des données d'utilisateur certifiées, obtenir des données d'utilisateur certifiées sur la base de l'indication des données d'utilisateur certifiées,
décrypter le premier ensemble crypté de données de la partie modifiée comprise dans les données d'utilisateur certifiées, pour fournir le premier ensemble de données ; et
fournir au demandeur le premier ensemble de données associé aux données vérifiées de l'utilisateur pour permettre la caractérisation de l'utilisateur inconnu.

10. Procédé mis en œuvre par ordinateur de caractérisation d'un utilisateur inconnu à partir de données d'utilisateur certifiées, où les données d'utilisateur certifiées ont été générées par modification d'un certificat authentifié, où les données d'utilisateur certifiées comprennent une partie modifiée créée par modification d'une partie modifiable du certificat authentifié, la partie modifiée et la partie modifiable comprenant toutes deux un premier ensemble de données cryptées, où le premier ensemble de données cryptées a été créé par cryptage d'un premier ensemble de données à l'aide d'au moins une clé publique d'au moins un système fiduciaire respectif, le premier ensemble de données ayant été associé à des données d'utilisateur vérifiées par une entité associée, les données d'utilisateur vérifiées comprenant des informations personnelles de l'utilisateur inconnu, la partie modifiable étant modifiable de telle sorte que, lorsqu'elle est modifiée, le certificat authentifié ne peut plus être associé aux données d'utilisateur vérifiées, les données d'utilisateur certifiées comprenant un identifiant de l'entité d'association,
le procédé exécuté par une entité souhaitant caractériser l'utilisateur inconnu, le procédé comprenant les étapes suivantes :
fournir, à l'au moins un système fiduciaire, les données d'utilisateur certifiées ou une indication des données d'utilisateur certifiées, l'indication des données d'utilisateur certifiées permettant aux données d'utilisateur certifiées d'être récupérées par l'au moins un système fiduciaire ;
recevoir, en provenance de l'au moins un système fiduciaire, le premier ensemble de données ;
fournir à l'entité associée le premier ensemble de données ; et
recevoir, en provenance de l'entité d'association, des données d'utilisateur vérifiées comprenant des informations personnelles de l'utilisateur inconnu.

11. Procédé selon la revendication 10, dans lequel l'identifiant de l'entité d'association comprend l'une ou plusieurs parmi :
une signature signée à l'aide de la clé privée de l'entité d'association où, éventuellement, la signature est comprise dans la partie modifiée ; et
une clé publique de l'entité d'association comprise dans le certificat authentifié où, éventuellement, la clé publique est comprise dans une partie non modifiée du certificat authentifié.

12. Procédé selon l'une quelconque des revendications 10 et 11, dans lequel la partie modifiée est une partie re-randomisée et dans lequel la modification est une re-randomisation.

13. Produit programme informatique comprenant des instructions qui, lorsqu'elles sont exécutées, amènent un ou plusieurs processeurs à exécuter le procédé selon l'une des revendications 1 à 12.

14. Support lisible par ordinateur comprenant des instructions qui, lorsqu'elles sont exécutées, amènent un ou plusieurs processeurs à exécuter le procédé selon l'une des revendications 1 à 12.

15. Processeur configuré pour exécuter le procédé selon l'une des revendications 1 à 12.
